# EUROPEAN PATENT APPLICATION

(11) **EP 1 098 013 A1**
(43) Date of publication of application: **09.05.2001**
(21) Application number: 00309751.6
(22) Date of filing: 03.11.2000
(51) Int. Cl.: C23C 4/02, C04B 41/90

(54) **Coating of ultra-hard materials**

(30) Priority: 05.11.1999 GB 9926305
(71) Applicant: De Beers Industrial Diamonds (Proprietary) Limited, Johannesburg 2001 (ZA)
(72) Inventor: Collins, John Lloyd, Willesden Green, London (GB)
(74) Representative: Jones, Alan John

(57) **Abstract**

A unit which comprises a body (10) of ultra-hard material such as CVD diamond has a layer (16) of plasma spray cemented carbide bonded to a surface (14) thereof. The bonding is achieved through a bonding layer comprising an inner region (18) bonded to the surface (14) and comprising a minor amount of a carbide-forming metal and a major amount of a ductile metal and an outer region (20) bonded to the cemented carbide layer (16) comprising nickel, cobalt, iron or an alloy containing one or more of these metals.

## Description

### BACKGROUND TO THE INVENTION

THIS invention relates to coating ultra-hard materials such as diamond materials.

It is known that the chemical vapour deposition (CVD) of diamond on to certain substrates is limited by the chemical interaction of the substrate material at deposition temperatures and the growing of the CVD diamond layer. A particular example is the growth of CVD diamond on to WC-Co cemented carbides, where the Co content of the cemented carbide interacts with the growing layer at the interface between the CVD diamond and the cemented carbide, graphitising the diamond layer leading to very poor adhesion. The same is true for all substrate materials of this kind where the constituents of the substrate in some way diminish the bond strength between the growing CVD diamond layer and the substrate. This effect makes such coated pieces unusable in many applications. The problem is exacerbated when the grown layer is thicker than, say, 0,1mm where the internal stresses in the diamond caused by a mismatch of coefficient of thermal expansions of the diamond and the substrate add to delamination of the layer from the substrate. Attempts to overcome this problem by denuding the surface of such substrates by chemical or other etching of the graphitising component have been moderately successful for thin (0,1mm) layers. For thicker layers the bond is unreliable and bond strengths are achieved which are generally too low for the many mechanical applications such as machining.

A possible solution to this problem in mechanical applications is to use brazing. However, brazing is limited to small (typically less than 10mm square) pieces, because the brazing process introduces high stresses in the CVD diamond and substrate which can lead to delamination or cracking in the composite piece. Brazing also requires some special surface preparations prior to brazing and must be carefully performed to produce an adequate bond, even for small pieces. In the case of some diamond materials, e.g. single crystal diamond, these problems are often exhibited by low bond shear strengths and incomplete wetting of the diamond or substrate surface.

Similar problems present themselves with other ultra-hard materials such as diamond compacts (also known as polycrystalline diamond or PCD) and polycrystalline cubic boron nitride (also known as PCBN).

### SUMMARY OF THE INVENTION

According to the present invention, a unit comprises a body of an ultra-hard material having a layer of plasma sprayed cemented carbide bonded to a surface thereof through a bonding layer comprising an inner region bonded to the surface and comprising a minor amount of a carbide-forming metal and a major amount of a ductile metal and an outer region bonded to the cemented carbide layer and comprising nickel, cobalt, iron or an alloy containing one or more of these metals.

The inner region of the bonding layer preferably comprises less than 10% by mass of the carbide-forming metal and the balance the ductile metal. The carbide-forming metal may, for example, be tungsten, molybdenum, hafnium or niobium and is preferably titanium. The ductile metal may be a metal such as copper, silver, gold and is preferably an alloy containing one or more such metals. An example of a particularly suitable alloy for the inner region is one comprising a minor amount of titanium and a major amount of copper and silver.

The outer region of the bonding layer will bond to both the inner region and the cemented carbide and will consist predominantly of nickel, cobalt, iron or an alloy containing one or more of these metals.

The body of ultra-hard material will typically take the form of a layer having a major surface to which the cemented carbide is bonded. The cemented carbide will be strongly bonded to the ultra-hard material through the bonding layer. The bond will typically have an average shear strength determined by a uni-directional shear strength test of at least 150 MPa. Further, it has been found that cemented carbide bonded to ultra-hard layers, as described above, does not result in any significant bowing of the ultra-hard layers.

The cemented carbide is readily brazeable to a substrate holder or the like. Thus, the unit of the invention can be used as an insert for a tool, it may be cut into smaller units which themselves can be used as inserts in tools or it may be used as a wear-resistant surface.

The ultra-hard material will typically be diamond and particularly chemical vapour deposited (CVD) diamond. The ultra-hard material may also be PCD, natural diamond or PCBN.

The invention has particular application to free standing CVD diamond plates. By using the method of the invention, it is possible to provide such plates with well-attached, tough, low stress, crack-free and hard coatings. These coatings may be applied to the nucleation surface of the plate, or to the growth surface of the plate. Coatings having a hardness of 1000 Vickers and a low porosity, i.e less than 1%, may be produced on the CVD diamond plates.

The cemented carbide may be any known in the art and comprises carbide particles bonded into a coherent form by means of bonding matrix which would typically be cobalt, nickel, iron or an alloy thereof. The bonding matrix will generally be present in an amount of 3 to 20 percent by mass of the cemented carbide. The carbide will preferably be tungsten carbide. The invention has particular application to units wherein the carbide layers are at least 0,2 mm in thickness and typically greater than 1 mm in thickness. The cemented carbide is readily brazeable rendering the ultra-hard material body itself readily brazeable for applications such as cutting tools. It has been found that the cemented carbide is so strongly bonded to the ultra-hard material body that delamination does not occur on brazing the unit to a substrate or tool holder.

The cemented carbide is deposited or applied to the bonding layer by plasma spraying. Plasma spraying includes vacuum plasma spraying, High Velocity Oxy Fuel spraying (HVOF), detonation fuel spraying, detonation gun or D-gun or super D-gun spraying and laser assisted plasma spraying. In all such spraying, a mass of the carbide particles and bonding metal is heated and accelerated by a high temperature, high velocity gas stream which can reach supersonic or close to supersonic speeds. During this heating and acceleration, the metal component of the mass becomes molten/or semi-molten and in this state the mass is adhered to a surface of a substrate to form a coating. Plasma spraying techniques are described, for example, in US patents 5,217,746 and 5,157,308 and European Publications 513497 and 296814.

According to another aspect of the invention, a method of producing the unit as described above, includes the steps of providing a body of an ultra-hard material, applying a first layer comprising a minor amount of a carbide-forming metal and a major amount of a ductile metal to a surface of the body, applying an outer layer of nickel, cobalt, iron or an alloy containing one or more of these metals to the first layer and depositing a layer of cemented carbide on the outer layer by means of plasma spraying.

### BRIEF DESCRIPTION OF THE DRAWINGS

- **Figure 1**: is a perspective view of an embodiment of an ultra-hard material containing unit of the invention, and
- **Figure 2**: is a section along the line 2-2 of Figure 1.

### DESCRIPTION OF EMBODIMENTS

The embodiment of the invention will now be described with reference to the accompanying drawings. Referring to the drawings, a layer 10 of ultra-hard material such as CVD diamond has major surfaces 12 and 14 on opposite sides thereof. The surface 14 has a layer 16 of plasma sprayed cemented carbide bonded to it.

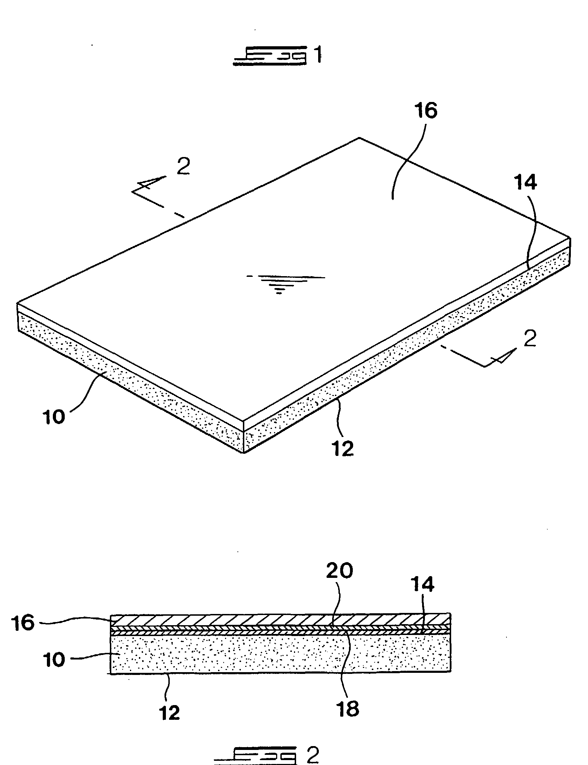

Figure 2 illustrates the manner in which the layer 16 is bonded to the surface 14. The layer 16 is bonded to the surface 14 through a bonding layer which comprises an inner region 18 bonded to the surface 14 and an outer region 20 bonded to the cemented carbide layer 16. The inner region 18 comprises a minor amount of a carbide-forming metal and a major amount of a ductile metal. The outer region 20 comprises nickel, cobalt, iron or an alloy containing one or more of these metals.

In a further embodiment of the invention, a CVD diamond plate had a layer of cemented carbide and a bonding layer applied to a surface thereof in the following manner.
1. The growth surface of a CVD diamond plate to be coated was RF bias sputter cleaned in argon. The growth surface of the CVD diamond freestanding plate had a typical surface toughness of Rₐ 2-4µm. This surface can be further roughened by grit blasting with fine (about 50µm) silica or quartz grits to provide additional keying surface for subsequent depositions.
2. A bonding layer was then produced on the sputter cleaned growth surface of the CVD diamond plate. This layer was produced by depositing a layer of a titanium/copper/silver alloy on the sputter cleaned surface and a layer of nickel then placed on the alloy layer. A paste or composite foil can also be used. The alloy layer consisted on 4,5% titanium, 26,7% copper, and 68,8% silver, all percentages being on a mass basis. The thus produced un-bonded assembly was heated in a furnace to a temperature of 900°C. This temperature was maintained for a time sufficient to cause the alloy to melt and bond to the nickel. It was found that a strong mechanical/chemical bond between the alloy layer and the CVD diamond plate was produced. Also a strong bond between the nickel and alloy layers was produced.
3. A 0,2-0,4mm thick layer of WC-12%Co was HVOF sprayed on to outer exposed surface of the nickel layer. The spraying was carried out at about 450°C using standard HVOF spray parameters and techniques. Commonly available WC-12Co powder of grain size about 20µm was used. The spraying produced a layer of cemented carbide containing 12% cobalt as a binder. This layer was firmly bonded to the nickel layer and had a thickness of about 1,2mm. The composite coating, i.e. cemented carbide layer and bonding layer, was a low stress coating which did not cause distortion of the CVD diamond plate or induce cracking in either the composite coating itself or in the CVD diamond. The cemented carbide is readily brazeable to substrates such as steel tool shanks or blades.
4. Using the process conditions described above, it was found that composite coatings could be produced on CVD diamond plates which had shear strengths of the order of 160 MPa and minimal bowing. Further, there was no delamination of any of the layers during subsequent brazing of the cemented carbide layer to a steel or similar substrate.

The method described above can also be applied to the nucleation face of the CVD diamond if required, although a mechanical keying layer is preferable in this case. Such a mechanical keying layer can be made by laser scribing shallow, e.g. about 20µm, rough-edged lines randomly across the surface. This technique can also be used for the growth face to enhance further adhesion of the bonding layer. In the case of electrically conductive CVD diamond this can be applied by EDM or EDG techniques.

The size of the CVD diamond plate to be coated by the invention is limited only by the size available - the coating techniques can be used to coat very large, e.g. metres square, components.

The adhesion of the composite coatings to CVD diamond plates, as described above, has been tested at room temperature and shown to be superior to typical brazed joint shear strengths formed using active grazes. Typical braze shear strengths for CVD diamond to WC - 12% Co are about 150MPa whereas the WC - 12% Co coatings applied by the method of the invention has been shown to have shear strengths exceeding 160 MPa under similar test conditions.

The method described above can be used to produce composite coatings on other ultra-hard materials such as PCBN and PCD.

The unit of the invention may comprise various shapes of ultra-hard bodies and coatings on various surfaces thereof. For example, the ultra-hard body may have a cup shape and the composite coating may be applied to an inner surface thereof. That inner surface, by virtue of the exposed cemented carbide, can be brazed or otherwise bonded to more cemented carbide which can fill the cup. The resulting unit will thus comprise an inner cemented carbide core having an outer skin or layer of ultra-hard material.

## Claims

1. A unit comprising a body (10) of an ultra-hard material having a layer (16) of plasma sprayed cemented carbide bonded to a surface (14) thereof through a bonding layer comprising an inner region (18) bonded to the surface and comprising a minor amount of a carbide-forming metal and a major amount of a ductile metal and an outer region (20) bonded to the cemented carbide layer and comprising a metal selected from nickel, cobalt, iron and an alloy containing one or more of these metals.

2. A unit according to claim 1 wherein the inner region (18) comprises less than 10% by mass of carbide-forming metal and the balance the ductile metal.

3. A unit according to claim 1 or claim 2 wherein the carbide-forming metal is selected from tungsten, molybdenum, hafnium, niobium and titanium.

4. A unit according to any one of the preceding claims wherein the ductile metal is selected from copper, silver, gold and an alloy containing one or more of these metals.

5. A unit according to any one of the preceding claims wherein the inner region (18) comprises a minor amount of titanium and a major amount of copper and silver.

6. A unit according to any one of the preceding claims wherein the ultra-hard material is selected from CVD diamond, PCD, natural diamond and PCBN.

7. A unit according to any one of the preceding claims wherein the cemented carbide is cemented tungsten carbide.

8. A unit according to any one of the preceding claims wherein the carbide layer (16) has a thickness of at least 0,2mm.

9. A unit according to any one of the preceding claims wherein the carbide layer (16) has a thickness of at least 1mm.

10. A unit according to any one of the preceding claims wherein the plasma spray is selected from the group of vacuum plasma spraying, High Velocity Oxy Fuel spraying, detonation fuel spraying, detonation gun spraying, D-gun spraying, super D-gun spraying and laser assisted plasma spraying.

11. A method of producing a unit according to any one of the preceding claims includes the steps of providing a body (10) of ultra-hard material, applying a first layer (18) comprising a minor amount of a carbide-forming metal and a major amount of a ductile metal to a surface (14) of the body (10), applying an outer layer (20) of a metal selected from nickel, cobalt, iron and an alloy containing one or more of these metals to the first layer (18) and depositing a layer (16) of cemented carbide on the outer layer (20) by means of plasma spraying.

12. A method according to claim 11 wherein the plasma spraying is selected from vacuum spraying, High Velocity Oxy Fuel spraying, detonation fuel spraying, detonation gun spraying, D-gun spraying, super D-gun spraying and laser assisted plasma spraying.

13. A method according to claim 12 wherein the ultra-hard material is CVD diamond and the first layer (18) is applied to the growth surface of the CVD diamond.

14. A method according to claim 12 wherein the hard material is CVD diamond and the first layer (18) is applied to the nucleation surface of the CVD diamond.
